# EUROPÄISCHE PATENTANMELDUNG

(11) **EP 4 636 291 A1**
(43) Veröffentlichungstag der Anmeldung: **22.10.2025**
(21) Anmeldenummer: 25170972.1
(22) Anmeldetag: 16.04.2025
(51) Int. Cl.: F16L 3/02, F16L 3/237, F16L 33/30, F16L 43/00, F16L 55/035, H01M 10/6568

(54) **VERBINDERHALTER-VERBINDER-EINHEIT**

(30) Priorität: 17.04.2024 DE 102024110747
(71) Anmelder: Voss Automotive GmbH, 51688 Wipperfürth (DE)
(72) Erfinder: Fischer, Paul, 51427 Bergisch Gladbach (DE); Offermann, Malte, 51688 Wipperfürth (DE); Ahouri, Mustapha, 58507 Lüdenscheid (DE); Brügger, Jens, 58553 Halver (DE); Klein, Roland, 51688 Wipperfürth (DE)
(74) Vertreter: Rebbereh, Cornelia

(57) **Zusammenfassung**

Bei einer Verbinderhalter-Verbinder-Einheit (1), umfassend zumindest einen Verbinderhalter (2), zumindest zwei Fluidverbinder (3, 4) und jeweils zumindest eine Toleranzausgleichseinrichtung, wobei der zumindest eine Verbinderhalter (2) zumindest zwei Aufnahmen (20, 21) zur Aufnahme der zumindest zwei Fluidverbinder (3, 4) aufweist, sind der Verbinderhalter (2), die zumindest zwei Fluidverbinder (3, 4) und die zumindest eine Toleranzausgleichseinrichtung zum Toleranzausgleich bezüglich der Anordnung des jeweiligen Fluidverbinders (3, 4) in einer jeweiligen der Aufnahmen (20, 21) des zumindest einen Verbinderhalters (2) jeweils als separate Teile ausgebildet und hergestellt und ineinanderfügbar oder ineinandergefügt, ist die zumindest eine Toleranzausgleichseinrichtung als Ausgleichselement (5, 6) ausgebildet und in eine jeweilige der Aufnahmen (20, 21) des zumindest einen Verbinderhalters (2) einfügbar oder eingefügt und dient einerseits zum Fixieren der Position der zumindest zwei Fluidverbinder (3, 4) in den Aufnahmen (20, 21), andererseits zum Ermöglichen eines Toleranzausgleichs.

## Beschreibung

Die Erfindung betrifft eine Verbinderhalter-Verbinder-Einheit, umfassend zumindest einen Verbinderhalter, zumindest zwei Fluidverbinder und jeweils zumindest eine Toleranzausgleichseinrichtung, wobei der zumindest eine Verbinderhalter zumindest zwei Aufnahmen zur Aufnahme der zumindest zwei Fluidverbinder aufweist.

Verbinderhalter mit Fluidverbindern, an denen insbesondere Kühlmittelleitungen eines oder mehrerer Kühlkreisläufe angeschlossen sind bzw. werden können und die als Schnittstelle zwischen den Kühlmittelleitungen und beispielsweise einem Kühlelement oder Kühlaggregat einer Traktionsbatterie eines Fahrzeugs dienen, sind im Bereich von Thermomanagement-Anordnungen in Fahrzeugen bekannt. Um eine kompakte Einheit zu bilden, die direkt an dem Kühlelement oder Kühlaggregat befestigt werden kann, sind die Fluidverbinder in dem Verbinderhalter angeordnet und der Verbinderhalter mit den Fluidverbindern kann am gewünschten Einbauort in einem Fahrzeug befestigt werden. Der Verbinderhalter dient insbesondere dazu, eine Befestigung der Kühlmittelleitungen auf einem Kühlmodul, Kühlelement bzw. Kühlaggregat zu ermöglichen und weist zu diesem Zweck meist Befestigungsöffnungen zum Eingreifen von Befestigungsmitteln, wie Schrauben etc., auf. Mittels der Befestigungsmittel erfolgt die Befestigung des Verbinderhalters am z.B. Kühlmodul des Fahrzeugs. Die zumindest zwei Fluidverbinder sind auf bzw. in dem Verbinderhalter angeordnet und dort befestigt. Durch deren Anordnung in dem Verbinderhalter kann eine vorgebbare Position der Fluidverbinder zueinander und zu dem Kühlmodul bzw. einem Kühlelement, Kühlaggregat in einem Fahrzeug sichergestellt werden. Um einen Toleranzausgleich im Hinblick auf Fertigungstoleranzen bzw. Toleranzen am Einbauort im Fahrzeug und somit ein optimales Befestigen von insbesondere Kühlmittelleitungen an den Fluidverbindern einerseits und vor allem der Fluidverbinder am Kühlelement einer Traktionsbatterie andererseits zu ermöglichen, ist es ferner bekannt, eine Toleranzausgleichseinrichtung vorzusehen.

Ein solcher Aufbau ist beispielsweise aus der WO 2023/233101 A1 bekannt. Diese offenbart eine Vorrichtung zum Verbinden zweier Elemente miteinander, wobei die Vorrichtung zumindest eine Befestigungsplatte, die zum Verbinden mit einem Element eines Fahrzeugs vorgesehen ist, und zumindest ein rohrförmiges Endstück zum Verbinden der beiden Elemente miteinander umfasst. Die Befestigungsplatte umfasst eine Öffnung zur Aufnahme des rohrförmigen Endstücks mit einem Freiraum zum Ermöglichen einer Relativbewegung zwischen dem rohrförmigen Endstück und der Befestigungsplatte. Das rohrförmige Endstück ist in der Öffnung der Befestigungsplatte aufgenommen in einer Vielzahl von verformbaren Abstandshaltern, wobei jeder Abstandshalter einen ersten Halteabschnitt zum Befestigen an einem inneren Umfangsrand der Öffnung und einen zweiten Halteabschnitt zum Befestigen am rohrförmigen Endstück aufweist. Die Abstandshalter sind einteilig mit dem rohrförmigen Endstück und der Befestigungsplatte mittels der Befestigungsabschnitte ausgebildet. Aus der WO 2023/233101 A1 ist somit eine Einteiligkeit von Verbinderhalter, Fluidverbindern und Toleranzausgleichseinrichtung in Form der verformbaren Abstandshalter, die in der Draufsicht rautenförmig sind, bekannt.

Bei dem Aufbau der Verbinderhalter-Verbinder-Einheit gemäß der WO 2023/233101 A1 kann es bei Querbelastungen der beiden Fluidverbinder, die als rohrförmige Endstücke ausgebildet sind, zu deren Verkippen kommen, was, aufgrund der sehr dünnen Verbindungsstege zwischen den verformbaren Abstandshaltern als Toleranzausgleichseinrichtung und den beiden Fluidverbindern zu einer ungewollten Trennung zwischen diesen führen kann, also einem Abreißen der Fluidverbinder von den Abstandshaltern. Ebenfalls ist es möglich, dass sich die verformbaren Abstandshalter, also die Toleranzausgleichseinrichtung, aufgrund der dünnen Verbindungsstege zwischen diesen und dem Verbinderhalter ungewollt lösen, so dass der Gesamtaufbau der Verbinderhalter-Verbinder-Einheit gemäß der WO 2023/233101 A1 insbesondere bei Einwirken von Querkräften nicht ausreichend stabil sein wird. Es wäre daher wünschenswert, diese Problematik zu beheben.

Der vorliegenden Erfindung liegt daher die Aufgabe zugrunde, eine Verbinderhalter-Verbinder-Einheit, die zumindest einen Verbinderhalter, zumindest zwei Fluidverbinder und zumindest eine Toleranzausgleichseinrichtung umfasst, wobei der zumindest eine Verbinderhalter zumindest zwei Aufnahmen zur Aufnahme der zumindest zwei Fluidverbinder aufweist, dahingehend fortzubilden, dass einerseits eine größere Stabilität der Verbinderhalter-Verbinder-Einheit auch bei Einwirken von Querkräften auf diese, insbesondere auf die zumindest zwei Fluidverbinder, geschaffen wird und andererseits weiterhin ein sehr guter Ausgleich von Toleranzen am Einbauort insbesondere in einem Fahrzeug beim Einbau der Verbinderhalter-Verbinder-Einheit dort ermöglicht wird.

Die Aufgabe wird für eine Verbinderhalter-Verbinder-Einheit nach dem Oberbegriff des Anspruchs 1 dadurch gelöst, dass der Verbinderhalter, die zumindest zwei Fluidverbinder und die zumindest eine Toleranzausgleichseinrichtung zum Toleranzausgleich bezüglich der Anordnung des jeweiligen Fluidverbinders in einer jeweiligen der Aufnahmen des zumindest einen Verbinderhalters jeweils als separate Teile ausgebildet und hergestellt und ineinander fügbar oder ineinander gefügt sind, und dass die zumindest eine Toleranzausgleichseinrichtung als Ausgleichselement ausgebildet und in eine jeweilige der Aufnahmen des zumindest einen Verbinderhalters einfügbar oder eingefügt ist und einerseits zum Fixieren der Position der zumindest zwei Fluidverbinder in den Aufnahmen dient, andererseits zum Ermöglichen eines Toleranzausgleichs. Weiterbildungen der Erfindung sind in den abhängigen Ansprüchen definiert.

Dadurch wird eine kompakte Verbinderhalter-Verbinder-Einheit geschaffen, die nicht einteilig ist, sondern aus einzelnen Komponenten bzw. separaten Teilen aufgebaut ist, nämlich aus dem Verbinderhalter, den zumindest zwei Fluidverbindern und dem zumindest einen Ausgleichselement zum Schaffen eines Ausgleichs von Toleranzen am Einbauort der Verbinderhalter-Verbinder-Einheit, wie einem Kühlmodul, Kühlelement oder Kühlaggregat einer Traktionsbatterie eines Fahrzeugs, wobei zum Ausgleich dieser Toleranzen die Anordnung der Fluidverbinder in dem Verbinderhalter in der x-y-Ebene verändert werden kann. Durch die zumindest eine Toleranzausgleichseinrichtung in Form des zumindest einen Ausgleichselements, das in einer jeweiligen Aufnahme für einen jeweiligen Fluidverbinder im Verbinderhalter angeordnet wird, kann ein Ausgleich von Toleranzen in x- und y-Richtung ermöglicht werden. Zugleich fixiert das jeweilige Ausgleichselement die Position des jeweiligen Fluidverbinders in der jeweiligen Aufnahme des Verbinderhalters. Dadurch, dass die einzelnen Komponenten der Verbinderhalter-Verbinder-Einheit, also der Verbinderhalter, die zumindest zwei Fluidverbinder, die in diesem bzw. dessen Aufnahmen aufgenommen werden, und das jeweilige Ausgleichselement als Toleranzausgleichseinrichtung zum Ausgleichen von Fertigungstoleranzen bzw. Abmessungstoleranzen am Einbauort der Verbinderhalter-Verbinder-Einheit ausgebildet bzw. hergestellt werden, können diese Komponenten in x- und y-Richtung gegeneinander bewegt werden, wobei die Gesamtstabilität der Verbinderhalter-Verbinder-Einheit weiterhin aufrechterhalten bleibt, da die einzelnen Komponenten ineinander gefügt sind und nicht, wie bei der WO 2023/233101 A1 lediglich über dünne Stege miteinander einteilig verbunden sind. Ein Verkippen der in den Aufnahmen des Verbinderhalters aufgenommenen Fluidverbinder gegenüber dem Verbinderhalter ist im Unterscheid zum Stand der Technik WO 2023/233101 A1 daher nicht oder zumindest nur in ganz geringem Umfang möglich.

Vorteilhaft sind die zumindest zwei Aufnahmen des Verbinderhalters u-förmig ausgebildet, so dass der jeweilige Fluidverbinder dort seitlich in den offenen Bereich der u-förmigen Aufnahmen eingeschoben werden kann. Weiter vorteilhaft weisen die zumindest zwei Aufnahmen des Verbinderhalters jeweils zumindest einen in das Innere der U-Form hineinragenden plattenförmigen Auflageabschnitt auf zum Auflagern des jeweiligen Ausgleichselements und zumindest eines ersten Halteabschnitts des jeweiligen Fluidverbinders. Der jeweilige Fluidverbinder lagert somit mit einem ersten Halteabschnitt, insbesondere einem ersten flachen plattenförmigen Halteabschnitt, auf einer Seite des plattenförmigen Auflageabschnitts der jeweiligen Aufnahme des Verbinderhalters auf. Vorteilhaft lagert auf der gegenüberliegenden Seite des jeweiligen plattenförmigen Auflageabschnitts der jeweiligen Aufnahme des Verbinderhalters das jeweilige Ausgleichselement auf. Das Ausgleichselement ist weiter vorteilhaft zwischen dem zumindest einen plattenförmigen Auflageabschnitt der jeweiligen Aufnahme des Verbinderhalters und zumindest einem zweiten Halteabschnitt des jeweiligen Fluidverbinders aufnehmbar und haltbar oder aufgenommen und gehalten. Der jeweilige Fluidverbinder weist somit nicht nur einen ersten Halteabschnitt, sondern auch einen hierzu beabstandeten zweiten Halteabschnitt auf, der insbesondere ebenfalls flach plattenförmig ist. Vorteilhaft überdeckt er das Ausgleichselement zumindest teilweise, so dass das Ausgleichselement zwischen dem zweiten Halteabschnitt des jeweiligen Fluidverbinders und dem plattenförmigen Auflageabschnitt der jeweiligen Aufnahme des Verbinderhalters gehalten wird. Da sich der jeweilige Fluidverbinder mit seinem ersten Halteabschnitt auf der einen Seite des plattenförmigen Auflageabschnitts abstützt, das Ausgleichselement auf der gegenüberliegenden anderen Seite von diesem aufliegt und der Fluidverbinder mit seinem zweiten Halteabschnitt auf diesem aufliegt bzw. dieses hält, umgreift der jeweilige Fluidverbinder somit mit seinen beiden Halteabschnitten, also seinem ersten Halteabschnitt und seinem zweiten Halteabschnitt, den plattenförmigen Auflageabschnitt der jeweiligen Aufnahme des Verbinderhalters und das Ausgleichselement, das dort aufgelagert ist. Er hält somit das Ausgleichselement in z-Richtung auf dem plattenförmigen Auflageabschnitt der Aufnahme, lässt jedoch dessen Wirken zum Erzielen eines Toleranzausgleichs der Position des jeweiligen Fluidverbinders in der Aufnahme in x- und y-Richtung zu. Dementsprechend wird ein Relativbewegen des Fluidverbinders gegenüber dem Verbinderhalter in z-Richtung verhindert und auch ein Verkippen des Fluidverbinders innerhalb der jeweiligen Aufnahme des Verbinderhalters, ein Relativbewegen in x- und y-Richtung jedoch zugelassen.

Weiter vorteilhaft weist der jeweilige Fluidverbinder zumindest einen mit zumindest einer Rastnase versehenen Rastnasenabschnitt, insbesondere zumindest zwei mit zumindest jeweils einer Rastnase versehene Rastnasenarme, auf. Ferner weist weiter vorteilhaft der zumindest eine Verbinderhalter in zumindest einer eine jeweilige Aufnahme begrenzenden Wandung zumindest eine Durchgangsöffnung und/oder Aussparung zum Hindurchführen des zumindest einen mit der zumindest einen Rastnase versehenen Rastnasenabschnitts und zum Hintergreifen der zumindest einen Wandung mit der zumindest einen Rastnase des zumindest einen Rastnasenabschnitts auf. Hierdurch ist es möglich, die Bewegung des Fluidverbinders in x- und y-Richtung entsprechend zu begrenzen, da durch die jeweilige Rastnase endseitig an dem jeweiligen Rastnasenabschnitt des Fluidverbinders, die durch die Durchgangsöffnung und/oder Aussparung in der die Aufnahme begrenzenden Wandung hindurchgreift und die entsprechend mit der Durchgangsöffnung versehene Wandung hintergreift, eine Bewegung in x-Richtung begrenzt werden kann. Ein Bewegen in y-Richtung wird durch die Breite des Rastnasenabschnitts im Vergleich zur Breite der Durchgangsöffnung bzw. Aussparung begrenzt. Beispielsweise ist ein Bewegen des jeweiligen Fluidverbinders innerhalb der jeweiligen Aufnahme des Verbinderhalters in der x-y-Ebene um +/- 3 mm möglich.

Weiter vorteilhaft können die zumindest zwei Rastnasen der zumindest zwei mit diesen versehenen Rastnasenabschnitte des jeweiligen Fluidverbinders eine voneinander weggerichtete Orientierung aufweisen, um die zumindest eine mit der zumindest einen Durchgangsöffnung und/oder Aussparung versehene Wandung der jeweiligen Aufnahme in entgegengesetzten Richtungen zu hintergreifen. Die Erstreckungen der jeweiligen endseitig mit den Rastnasen versehenen Rastnasenabschnitte des Fluidverbinders können in x-Richtung unterschiedlich lang ausgebildet sein. Dies erweist sich insbesondere dann als vorteilhaft, wenn auch die jeweiligen Raststellen der zumindest einen Wandung zum Hintergreifen oder Verrasten mit den Rastnasen an unterschiedlichen Positionen im Verbinderhalter angeordnet sind. Beispielsweise kann für einen der beiden mit zumindest einer Rastnase versehenen Rastnasenabschnitte ein Hintergreifen eine Raststelle mit einem Rastprofil an dem Verbinderhalter benachbart zu der Wandung mit der Durchgangsöffnung und/oder Aussparung vorgesehen werden, wobei der Rastnasenabschnitt mit seiner zumindest einen Rastnase an diesem Rastprofil verrastet, während beispielsweise die zumindest eine Rastnase am anderen Rastnasenabschnitt direkt die zumindest eine Wandung der Aufnahme des Verbinderhalters hintergreift.

Der jeweilige Fluidverbinder für eine Verbinderhalter-Verbinder-Einheit weist insbesondere eine Winkelform auf, umfassend einen ersten Anschlussstutzen und einen zweiten Anschlussstutzen, die zur Medienführung miteinander fluidverbunden sind. Der zweite Anschlussstutzen dient zum Verbinden beispielsweise mit einer Kühlmittelleitung, der erste Anschlussstutzen zum Anschließen an beispielsweise einem Kühlelement, Kühlaggregat, Kühlmodul einer Traktionsbatterie eines Fahrzeugs. Den ersten Anschlussstutzen außenseitig umgebend umfasst der jeweilige Fluidverbinder weiter vorteilhaft ein tellerförmiges Element, das nach der Montage des Fluidverbinders am Verbinderhalter auf dessen Außenseite aufliegt. Zur Stabilisierung des tellerförmigen Elementes kann dieses in Richtung des Verbinderhalters mit Verstärkungselementen, insbesondere Versteifungsrippen, versehen sein. Auch andere Arten von Verstärkungselementen können zum Versteifen des tellerförmigen Elementes des jeweiligen Fluidverbinders vorgesehen werden. Die zumindest zwei Rastnasenabschnitte stellen die Hauptbegrenzungsmittel bezüglich der Bewegung in x-Richtung in Richtung des zweiten Anschlussstutzens des jeweiligen Fluidverbinders dar. Ferner wird die Bewegung in x-/y-Richtung durch einen umlaufenden Spalt zwischen dem zum Fluidverbinder gerichteten Ende des u-förmigen plattenförmigen Auflageabschnitts einer jeweiligen Aufnahme des Verbinderhalters und der dort benachbarten Außenseite des Fluidverbinders begrenzt.

Im abgewinkelten Bereich des jeweiligen Fluidverbinders, also im Übergangsbereich vom ersten Anschlussstutzen zum zweiten Anschlussstutzen, sind etwa parallel zu dem tellerförmigen Element die vorstehend bereits genannten nach außen vorkragenden plattenförmigen Halteabschnitte angeordnet, jeweils beabstandet zueinander und zu dem tellerförmigen Element. Räumlich zwischen den vorkragenden plattenförmigen Halteabschnitten sind vorteilhaft plattenförmige Abstützabschnitte angeordnet. Die Halteabschnitte sind auf der mit den Verstärkungselementen, insbesondere Versteifungsrippen, versehenen Seite des tellerförmigen Elementes am Fluidverbinder angeordnet. Der zweite Halteabschnitt des jeweiligen Fluidverbinders kann insbesondere den mit zumindest einer Rastnase versehenen zweiten Rastnasenabschnitt umfassen. Der mit der zumindest einen Rastnase versehene zweite Rastnasenabschnitt kragt dann außenseitig von dem zweiten Halteabschnitt des jeweiligen Fluidverbinders vor. Vorteilhaft ist der zweite Rastnasenabschnitt einteilig ausgebildet mit dem zweiten Halteabschnitt des jeweiligen Fluidverbinders. Weiter vorteilhaft erstrecken sich beide Rastnasenabschnitte in Verlängerung des zweiten Anschlussstutzens der Fluidverbinder.

Der mit der zumindest einen Rastnase versehene erste Rastnasenabschnitt kann weiter vorteilhaft zwischen dem zweiten Halteabschnitt und dem ersten Halteabschnitt angeordnet sein, wobei der erste Halteabschnitt des jeweiligen Fluidverbinders direkt benachbart zu dem tellerförmigen Element von diesem angeordnet sein kann. Die Verstärkungselemente, insbesondere Versteifungsrippen, am tellerförmigen Element erweisen sich insbesondere dann als vorteilhaft, wenn die Verbinderhalter-Verbinder-Einheit nach der endgültigen Montage und Ausrichtung aller ihrer Komponenten und Verbinden der Fluidverbinder mit den entsprechenden Einrichtungen am Einbauort, wie einem Kühlmodul, Kühlmittelleitungen etc., vollständig mit diesen zusammen eingeschäumt wird, was zum Fixieren der Verbinderhalter-Verbinder-Einheit und der jeweiligen Positionen der einzelnen Komponenten von dieser in Bezug auf die weiteren Komponenten und Einrichtungen, also die jeweilige Gegenkontur, am Einbauort beispielsweise in einem Fahrzeug vorteilhaft durchgeführt wird. Da beim Einschäumen Kräfte auf die Verbinderhalter-Verbinder-Einheit insbesondere im Bereich der aus dieser mit ihren ersten Anschlussstutzen herausragenden Fluidverbinder einwirken, die zu einem ungewollten Bewegen von diesen und damit schlimmstenfalls zu einem Lösen von den Einrichtungen am Einbauort führen können, erweist sich das Vorsehen der Verstärkungselemente als sehr vorteilhaft, um Stabilität zu schaffen.

Der zumindest eine erste Rastnasenabschnitt, insbesondere Rastnasenarm, mit seiner zumindest einen insbesondere endseitig angeordneten Rastnase ist weiter vorteilhaft Teil eines ersten plattenförmigen Abstützabschnitts, der sich etwa parallel zu den beiden Halteabschnitten außenseitig vorkragend am jeweiligen Fluidverbinder erstreckt. Parallel zu diesem ersten plattenförmigen Abstützabschnitt kann noch ein weiterer auskragender plattenförmiger Abstützabschnitt außenseitig am Fluidverbinder angeordnet sein, der bezüglich seiner Außenabmessungen etwa denen des mit dem ersten Rastnasenabschnitt versehenen plattenförmigen Abstützabschnitts entspricht. Beide Abstützabschnitte weisen vorteilhaft einen geringeren Abstand zueinander auf als zu den beiden Halteabschnitten des jeweiligen Fluidverbinders. Die beiden somit zwischen den beiden Halteabschnitten des Fluidverbinders angeordneten vorkragenden plattenförmigen Abstützabschnitte dienen zum Schaffen einer seitlichen Anlagefläche für das Ausgleichselement. Dieses kann sich außenseitig an diesen beiden vorkragenden Abstützabschnitten des jeweiligen Fluidverbinders abstützen.

Das jeweilige Ausgleichselement für eine Verbinderhalter-Verbinder-Einheit ist vorteilhaft u-förmig, umfassend zwei Schenkel und ein die beiden Schenkel miteinander verbindendes Mittelstück, wobei das Ausgleichselement in das Innere der U-Form hineinragende, jeweils in einem Winkel zueinander stehende Arme aufweist, die an dem jeweiligen Fluidverbinder außenseitig an- und/oder eingreifbar sind oder an dem jeweiligen Fluidverbinder außenseitig an- und/oder eingreifen. Die in einem Winkel zueinander stehenden Arme des Ausgleichselements greifen außenseitig an den beiden vorkragenden Abstützabschnitten des jeweiligen Fluidverbinders an und können dessen Position in der jeweiligen Aufnahme des Verbinderhalters in x-und y-Richtung fixieren. Die Arme sind zu einem gewissen Grad bewegbar, so dass zum Ausgleich von Toleranzen am Einbauort und dementsprechend Anpassen der Position des jeweiligen Fluidverbinders an die der entsprechenden Gegenkontur dort, insbesondere eines Kühlmoduls, etc., eine Bewegung des jeweiligen Fluidverbinders gegenüber dem Ausgleichselement innerhalb der jeweiligen Aufnahme in x- und y-Richtung möglich ist. Die Arme des Ausgleichselements sind vorteilhaft so ausgelegt, dass sie die maximal mögliche Bewegung des Fluidverbinders, begrenzt durch die U-Form des Verbinderhalters, ausgleichen können, ohne zu versagen, z.B. eine Bewegung in x-/y-Richtung um +/- 3 mm. Die Arme können eine Rückstellwirkung im Rahmen des E-Moduls des für ihre Herstellung verwendeten Materials aufweisen und somit federnd wirken.

Vorteilhaft sind die Arme leicht federnd an den Schenkeln und dem Mittelstück des Ausgleichselements angeordnet, insbesondere ein Übergang von einem jeweiligen Arm zu einem jeweiligen Schenkel und dem Mittelstück verrundet ausgebildet. Um die Bewegbarkeit der Arme zu ermöglichen und eine gewisse Flexibilität von diesen, kann beispielsweise ein solcher verrundeter Übergang von den Armen zu den beiden Schenkeln und/oder dem Mittelstück des jeweiligen Ausgleichselements vorgesehen sein. Hierdurch sind höhere Dehnungen möglich bzw. eine Beweglichkeit in einem vorgebbaren Bereich. Das jeweilige Ausgleichselement kann beispielsweise aus einem unverstärkten Material, insbesondere Kunststoffmaterial, bestehen, wie z.B. aus PA6/6 oder PBT (Polybutylenterephthalat).

Die beiden Schenkel und das die Schenkel miteinander verbindende Mittelstück des u-förmigen Ausgleichselements können jeweils mit den Armen versehen sein. Beispielsweise kann das Mittelstück im mittleren Bereich seiner Längserstreckung zumindest zwei Arme aufweisen und die beiden Schenkel ebenfalls jeweils zumindest zwei, insbesondere drei Arme aufweisen. Jeder der Arme steht vorteilhaft in einem Winkel zu dem jeweils benachbarten. Beispielsweise können die zumindest zwei Arme am Mittelstück in Richtung aufeinander zu vom Mittelstück des Ausgleichselements abgewinkelt sein, so dass sie mit dem Mittelstück jeweils einen spitzen Winkel einschließen. Hierdurch ist es möglich, eine Bewegung in x-Richtung für den jeweiligen Fluidverbinder, der mit diesen Armen in Verbindung tritt, zu ermöglichen. Der jeweilige spitze Winkel der zumindest zwei Arme zu dem Mittelstück des Ausgleichselements verringert sich, wenn der Fluidverbinder weiter in Richtung des Mittelstücks in x-Richtung bewegt wird, während sich der Winkel vergrößert, wenn der Fluidverbinder in der entgegengesetzten Richtung, also weg von dem Mittelstück des Ausgleichselements, in x-Richtung bewegt wird.

Die beiden Schenkel können beispielsweise jeweils drei Arme aufweisen. Zwei der Arme der Schenkel können jeweils v-förmig zueinander stehen und der dritte Arm der beiden Schenkel in Richtung zu den v-förmig zueinander geneigten Armen in einem spitzen Winkel zu dem jeweiligen Schenkel angeordnet sein. Durch die beiden v-förmig zueinander stehenden Arme kann eine Beweglichkeit in y-Richtung für den Fluidverbinder, der mit diesen in Kontakt kommt, zugelassen werden. Das jeweilige gebildete V vergrößert sich bezüglich des von diesem eingeschlossenen Winkels dann, wenn der Fluidverbinder in Richtung dieses Schenkels in y-Richtung bewegt wird, während sich der Winkel, der von den beiden das V einschließenden Armen zueinander eingenommen wird, verringert, wenn der Fluidverbinder von diesem Schenkel weg in y-Richtung in Richtung zu dem anderen Schenkel bewegt wird. Der dritte, insbesondere im endseitigen Bereich des jeweiligen Schenkels des Ausgleichselements angeordnete Arm an jedem der Schenkel kann zur Positionierung des jeweiligen Fluidverbinders dienen. Zur Begrenzung der Bewegung des jeweiligen Fluidverbinders in x-Richtung dienen die Rastnasenabschnitte mit ihren endseitig angeordneten Rastnasen. Der jeweilige dritte Arm legt sich vorteilhaft ebenfalls an den beiden Abstützabschnitten des jeweiligen Fluidverbinders außenseitig an, jedoch vorteilhaft etwa senkrecht zu der Anlagefläche der anderen beiden v-förmig zueinander stehenden Arme am jeweiligen Schenkel des Ausgleichselements. Hierdurch kann auch der jeweilige dritte Arm den Toleranzausgleich für den Fluidverbinder in x-Richtung, jedoch in Richtung weg von dem Mittelstück des Ausgleichselements und somit in Richtung der offenen Seite der u-förmigen Aufnahme des Verbinderhalters, also in negativer Steckrichtung bezüglich des jeweiligen Fluidverbinders und des Verbinderhalters und seiner Aufnahmen, ermöglichen.

Im Anlieferzustand der Verbinderhalter-Verbinder-Einheit kann der jeweilige Fluidverbinder in der jeweiligen Aufnahme des Verbinderhalters mit einer Toleranz von +/- 1 mm angeordnet sein. Die Flexibilität bzw. Bewegbarkeit der Arme des jeweiligen Ausgleichselements kann jedoch ein Verschieben bzw. Bewegen in der x-y-Ebene um +/- 3 mm zulassen, um den gewünschten Ausgleich von Toleranzen am Montage- bzw. Einbauort der Verbinderhalter-Verbinder-Einheit zu ermöglichen und somit die ersten Anschlussstutzen des Fluidverbinders mit einer Gegenkontur im Fahrzeug, insbesondere einem Kühlelement, Kühlaggregat oder Kühlmodul einer Traktionsbatterie des Fahrzeugs, verbinden zu können. Hierbei ist insbesondere auch ein geringfügiges Drehen des Fluidverbinders in der x-y-Ebene möglich, somit ein Drehen um eine gedachte Hochachse des jeweiligen Fluidverbinders, die sich durch dessen ersten Anschlussstutzen als Drehachse erstreckt. Die Position der zumindest zwei Fluidverbinder in den zumindest zwei Aufnahmen des Verbinderhalters der Verbinderhalter-Verbinder-Einheit kann im Auslieferzustand im Wesentlichen fix sein, wobei ein Auslenken bzw. Bewegen des jeweiligen Fluidverbinders innerhalb der jeweiligen Aufnahme des Verbinderhalters unter Einwirken einer Kraft in x- bzw. y-Richtung ermöglicht wird aufgrund der Flexibilität bzw. Beweglichkeit der Arme des jeweiligen Ausgleichselements.

Weiter vorteilhaft kann das Mittelstück des Ausgleichselements in seinem mittleren Bereich eine geringere Höhe aufweisen als das Ausgleichselement über seine übrige Erstreckung seines Mittelstücks und seiner Schenkel hinweg.

Hierdurch kann ermöglicht werden, dass die mit der jeweils zumindest einen Rastnase versehenen Rastnasenabschnitte des jeweiligen Fluidverbinders diesen mittleren Bereich des Mittelstücks des Ausgleichselements übergreifen und untergreifen können. Es wird somit ein Freiraum für die beiden Rastnasenabschnitte des jeweiligen Fluidverbinders geschaffen, damit diese über und unter dem Mittelstück des Ausgleichselements vorbeigeführt werden können.

Das Ausgleichselement ist insbesondere symmetrisch ausgebildet, so dass es in beliebiger Richtung verwendbar bzw. in die jeweilige Aufnahme des Verbinderhalters aufnehmbar ist. Der mit geringerer Höhe ausgebildete mittlere Bereich des Mittelstücks des jeweiligen Ausgleichselements wird benachbart zu der Durchgangsöffnung und/oder der Aussparung in der entsprechenden Wandung des Verbinderhalters, die die Aufnahme umgrenzt, angeordnet. Um das jeweilige Ausgleichselement auf der gewünschten richtigen Seite des Verbinderhalters anzuordnen, sind weiter vorteilhaft die zumindest zwei Aufnahmen des Verbinderhalters auf ihrer einen Seite bzw. Unterseite zumindest teilweise mit zumindest einer Fixiereinrichtung zum Fixieren des zumindest einen Ausgleichselements und auf ihrer gegenüberliegenden Seite bzw. Oberseite mit einer ein Einfügen des Ausgleichselements behindernden Einrichtung, wie beispielsweise einer entsprechend ein Einfügen des Ausgleichselements verhindernden Formgebung, versehen. Die zumindest eine Fixiereinrichtung kann beispielsweise in Form eines u-förmigen Wandungsabschnitts ausgebildet sein, der endseitig an der jeweiligen Aufnahme angeordnet ist und das jeweilige Ende des jeweiligen Schenkels eines jeweiligen Ausgleichselements abstützend aufnehmen kann. Eine ein Einfügen des jeweiligen Ausgleichselements behindernde Einrichtung kann beispielsweise dadurch ausgebildet werden, dass zumindest ein parallel zur Außenwandung verlaufender Wandungsabschnitt ausgebildet wird, der dort positioniert ist, wo auf der gegenüberliegenden Seite die Schenkel des Ausgleichselements angeordnet werden können. Dementsprechend ist ein Einfügen des Ausgleichselements auf der mit der ein Einfügen behindernden Einrichtung versehenen Seite des Verbinderhalters dann nicht möglich, da dies durch den zumindest einen parallel zur Außenwandung verlaufenden Wandungsabschnitt verhindert wird.

Der Verbinderhalter für eine Verbinderhalter-Verbinder-Einheit umfasst einen Körper, in dessen mittlerem Bereich die erste Aufnahme zur Aufnahme des ersten Fluidverbinders und an dessen einen Ende die zweite Aufnahme zur Aufnahme des zweiten Fluidverbinders angeordnet ist, wobei beide Aufnahmen jeweils u-förmig ausgebildet sind und jeweils einen in das Innere ihrer U-Form hineinragenden plattenförmigen Auflageabschnitt aufweisen zum Auflagern des Ausgleichselements. Der Verbinderhalter kann im Bereich außerhalb seiner zumindest zwei Aufnahmen zum Aufnehmen der Ausgleichselemente und Fluidverbinder mit Befestigungseinrichtungen, insbesondere Befestigungsöffnungen, zum Verbinden mit Komponenten am Einbauort beispielsweise in einem Fahrzeug versehen sein, wie einem Kühlelement, Kühlaggregat oder Kühlmodul einer Traktionsbatterie des Fahrzeugs. Zum Versteifen des Verbinderhalters kann dieser ferner zwischen den Befestigungsöffnungen und den Aufnahmen mit Versteifungsstegen oder anderen Verstärkungselementen versehen sein.

Zur näheren Erläuterung der Erfindung wird im Folgenden ein Ausführungsbeispiel von dieser näher anhand der Zeichnungen beschrieben. Diese zeigen in:
- Figur 1: eine perspektivische Draufsicht auf die Unterseite einer ersten Ausführungsform einer erfindungsgemäßen Verbinderhalter-Verbinder-Einheit,
- Figur 2: eine Draufsicht auf die Unterseite der Verbinderhalter-Verbinder-Einheit gemäß Figur 1,
- Figur 3: eine Seitenansicht der Verbinderhalter-Verbinder-Einheit gemäß Figur 1,
- Figur 4: eine Schnittansicht der Verbinderhalter-Verbinder-Einheit im Bereich ihres zweiten Fluidverbinders, geschnitten entlang der Linie A-A aus Figur 2,
- Figur 5: eine weitere Schnittansicht der Verbinderhalter-Verbinder-Einheit gemäß Figur 1 im Bereich von deren zweiten Fluidverbinder, geschnitten entlang der Linie B-B aus Figur 2,
- Figur 6: eine Draufsicht auf die Oberseite der Verbinderhalter-Verbinder-Einheit gemäß Figur 1,
- Figur 7: eine perspektivische Draufsicht auf die Oberseite der Verbinderhalter-Verbinder-Einheit gemäß Figur 1,
- Figur 8: eine perspektivische Ansicht des erfindungsgemäßen Verbinderhalters der Verbinderhalter-Verbinder-Einheit gemäß Figur 1,
- Figur 9: eine Unteransicht des Verbinderhalters gemäß Figur 8,
- Figur 10: eine Draufsicht auf den Verbinderhalter gemäß Figur 8,
- Figur 11: eine Seitenansicht des Verbinderhalters gemäß Figur 8,
- Figur 12: eine perspektivische Ansicht eines der beiden erfindungsgemäßen Fluidverbinder der Verbinderhalter-Verbinder-Einheit gemäß Figur 1,
- Figur 13: eine perspektivische Unteransicht des Fluidverbinders gemäß Figur 12,
- Figur 14: eine Seitenansicht des Fluidverbinders gemäß Figur 12,
- Figur 15: eine gegenüber der Ansicht in Figur 14 um 90° gedrehte Seitenansicht des Fluidverbinders gemäß Figur 12,
- Figur 16: eine weitere perspektivische Ansicht des Fluidverbinders gemäß Figur 12,
- Figur 17: eine perspektivische Draufsicht auf eines der beiden erfindungsgemäßen Ausgleichselemente der Verbinderhalter-Verbinder-Einheit gemäß Figur 1,
- Figur 18: eine Draufsicht auf das Ausgleichselement gemäß Figur 17,
- Figur 19: eine Seitenansicht des Ausgleichselements gemäß Figur 17 in Blickrichtung auf dessen Mittelstück, und
- Figur 20: eine Seitenansicht des Ausgleichselements gemäß Figur 17 mit Blickrichtung auf einen der beiden Schenkel des Ausgleichselements.

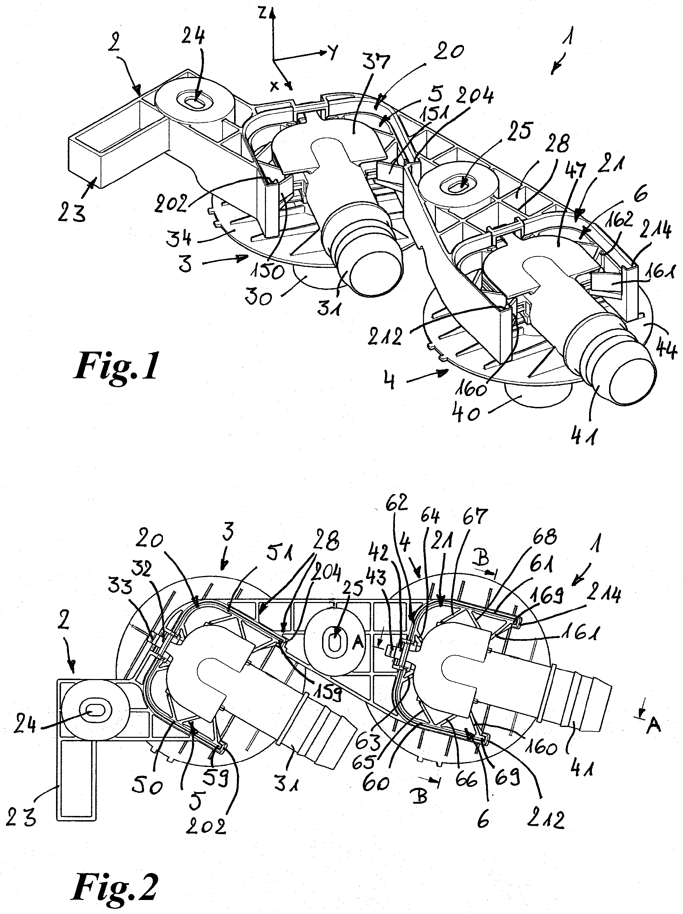

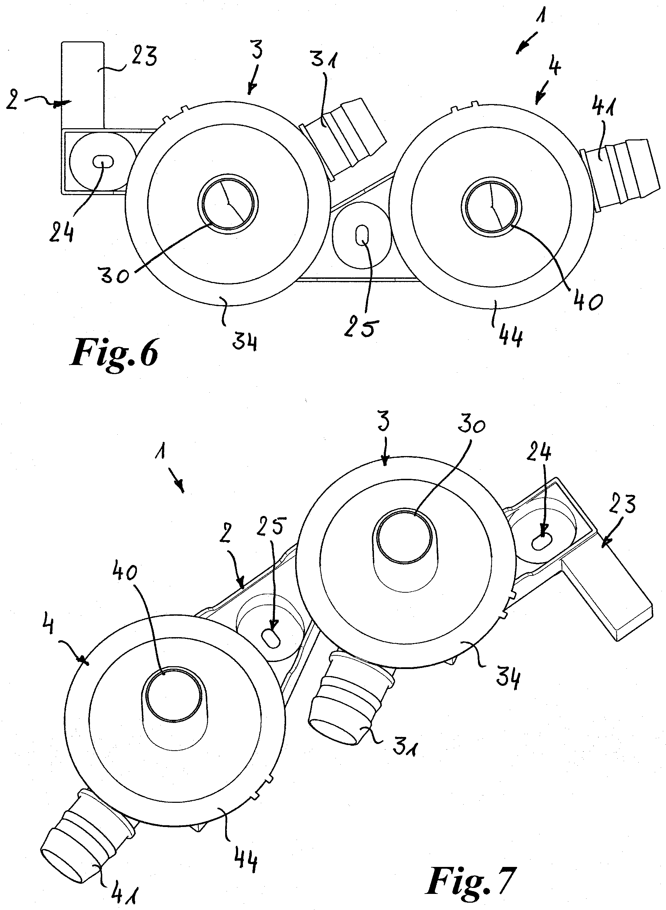

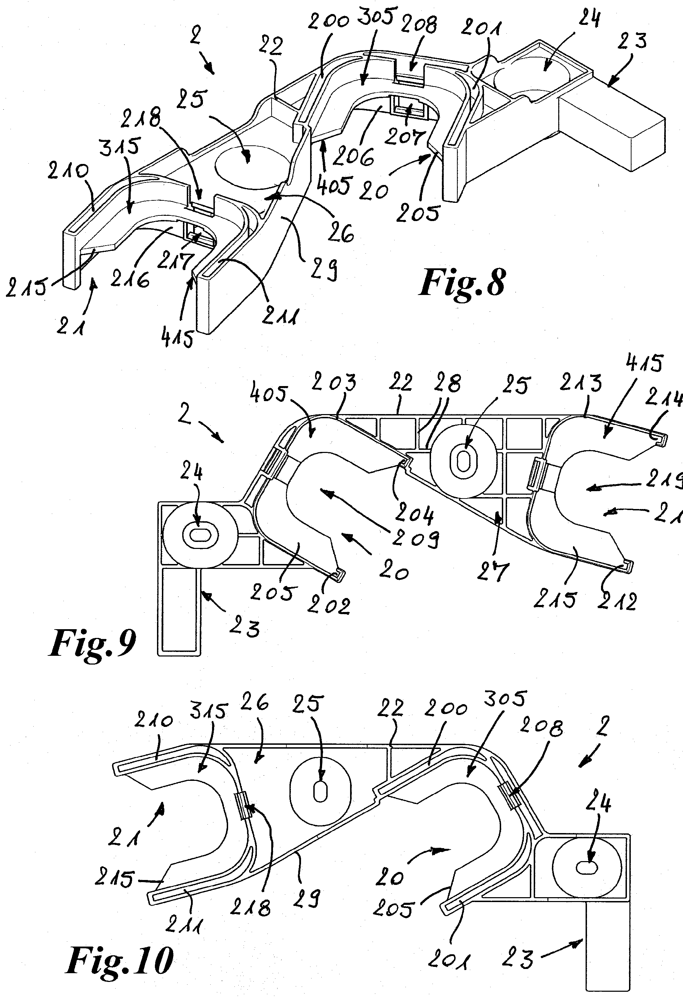

In den Figuren 1 bis 7 ist eine Verbinderhalter-Verbinder-Einheit 1 gezeigt. Diese umfasst einen Verbinderhalter 2, zwei Fluidverbinder 3, 4, die in einer jeweiligen Aufnahme 20, 21 des Verbinderhalters 2 angeordnet sind, und zwei Ausgleichselemente 5, 6, die dazu dienen, die Position der beiden Fluidverbinder 3, 4 in den beiden Aufnahmen 20, 21 zum Ausgleich von Toleranzen einstellen und zugleich fixieren zu können. Die beiden Fluidverbinder 3, 4 sind baugleich und auch die beiden Ausgleichselemente 5, 6 sind baugleich ausgebildet. Das jeweilige Ausgleichselement 5, 6 dient zum Toleranzausgleich bezüglich der Anordnung des jeweiligen Fluidverbinders 3, 4 in der jeweiligen Aufnahme 20 bzw. 21 des Verbinderhalters 2. Jeder der Fluidverbinder 3, 4 umfasst zwei Anschlussstutzen 30, 31 bzw. 40, 41, die zum Verbinden mit z.B. einem Kühlelement, Kühlmodul, Kühlaggregat etc. einer Traktionsbatterie eines Fahrzeugs einerseits und z.B. mit Kühlmittelleitungen o.ä. andererseits verbunden werden. Da die Abmessungen insbesondere im Bereich des Kühlelements, Kühlmoduls, Kühlaggregats im Fahrzeug variieren können, besteht die Möglichkeit, die Fluidverbinder 3, 4 innerhalb der Aufnahmen 20, 21 in der x-y-Ebene des Verbinderhalters 2 so weit bewegen zu können, dass die ersten Anschlussstutzen 30, 40 in entsprechende Öffnungen (nicht gezeigt) in einem Kühlelement, Kühlmodul, Kühlaggregat etc. aufgenommen werden können. Der Verbinderhalter 2, der im Detail den Figuren 8 bis 11 besser entnommen werden kann, umfasst einen Körper 22, an dessen einem Ende die zweite Aufnahme 21 angeordnet ist und in dessen mittleren Bereich die erste Aufnahme 20 angeordnet ist. Ferner weist der Körper 22 des Verbinderhalters 2 einen rechtwinklig abgewinkelten, bezüglich der am einen Ende des Verbinderhalters 2 angeordneten zweiten Aufnahme 21 am gegenüberliegenden Ende des Verbinderhalters 2 angeordneten Endabschnitt 23 auf. Um den Verbinderhalter 2 mit Einrichtungen bzw. Komponenten an einem Einbauort der Verbinderhalter-Verbinder-Einheit 1 verbinden zu können, wie einem Kühlelement, Kühlmodul, Kühlaggregat einer Traktionsbatterie eines Fahrzeugs, weist der Verbinderhalter 2 zwei Befestigungsöffnungen 24, 25 auf. Die erste Befestigungsöffnung 24 ist im Bereich zwischen dem rechtwinklig abgewinkelten Endabschnitt 23 und der ersten Aufnahme 20 des Verbinderhalters 2 angeordnet, während die zweite Befestigungsöffnung 25 im Bereich zwischen den beiden Aufnahmen 20, 21 angeordnet ist. Hierdurch ist ein optimales Befestigen des Verbinderhalters 2 und dementsprechend auch der Verbinderhalter-Verbinder-Einheit 1 beispielsweise an einem Kühlmodul, Kühlaggregat, Kühlelement etc. einer Traktionsbatterie eines elektromotorisch betriebenen Fahrzeugs oder an einem anderen Einbauort möglich.

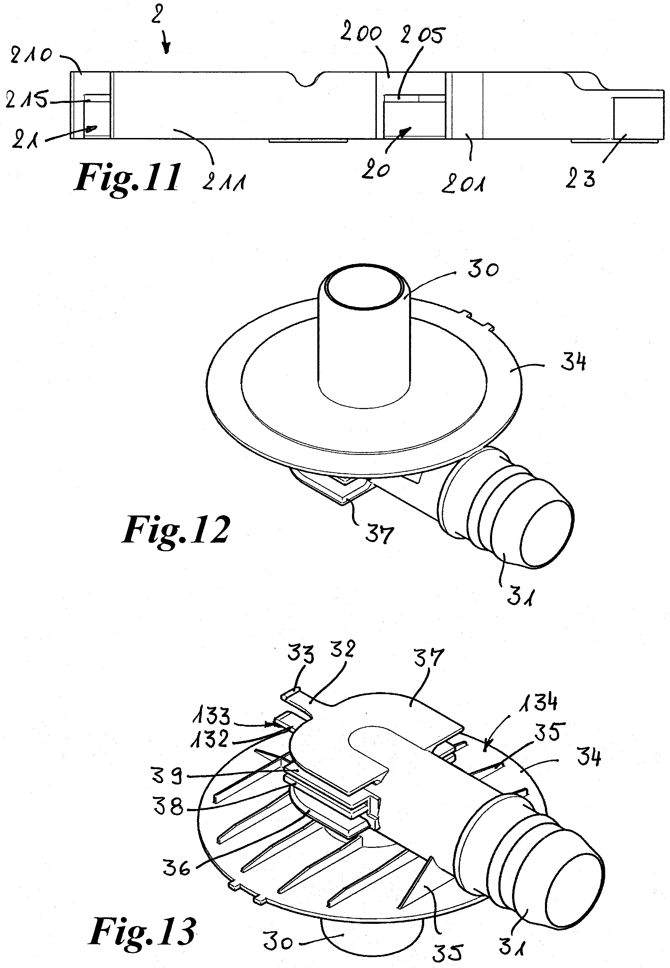

Wie weiter dem Vergleich der Figuren 9 und 10 entnommen werden kann, ist der Verbinderhalter 2 auf seinen beiden einander gegenüberliegenden Seiten, also seiner Oberseite 26 und seiner Unterseite 27, unterschiedlich ausgestaltet. Der Körper 22 des Verbinderhalters 2 ist auf seiner Unterseite 27 mit Versteifungsstegen 28, die schachbrettartig angeordnet sind, versehen, während seine Oberseite 26 lediglich randseitig und im Bereich der ersten Aufnahme 20 mit vorkragenden Wandungsabschnitten 29 versehen ist. Die beiden Aufnahmen 20, 21 des Verbinderhalters 2 sind ferner auf dessen Unterseite 27 so ausgebildet, dass das jeweilige Ausgleichselement 5 bzw. 6 dort aufgefügt werden kann, während sie auf der Oberseite 26 des Verbinderhalters 2 so ausgebildet sind, dass dort kein Ausgleichselement 5 bzw. 6 aufgefügt werden kann. Dies wird dadurch erzielt, dass auf der Oberseite 26 des Verbinderhalters 2 ein jeweiliger doppellagiger Wandabschnitt 200, 201 bzw. 210, 211 im Bereich der ersten Aufnahme 20 und der zweiten Aufnahme 21 angeordnet ist. Auf der Unterseite 27 des Verbinderhalters 2 sind die beiden Aufnahmen 20, 21 gegenüberliegend zu den doppellagigen Wandabschnitten 200, 201, 210, 211 hingegen mit einer jeweiligen Fixiereinrichtung 202, 204 bzw. 212, 214 versehen, die in der Ausgestaltung gemäß Figur 9 als u-förmig gebogener Endabschnitt einer jeweiligen Wandung 203 bzw. 213, die die jeweilige Aufnahme 20 bzw. 21 umgrenzt, ausgebildet ist. An den jeweiligen Fixiereinrichtungen 202, 204 bzw. 212 und 214 der beiden Aufnahmen 20, 21 kann sich das jeweilige Ausgleichselement 5 bzw. 6 mit den Enden seiner beiden Schenkel 50, 51 bzw. 60, 61 abstützen, wie dies Figur 2 entnommen werden kann. Hierdurch kann ein Herausgleiten des jeweiligen Ausgleichselements 5, 6 aus der jeweiligen Aufnahme 20 bzw. 21 verhindert werden. Die beiden Aufnahmen 20, 21 sind jeweils u-förmig ausgebildet und weisen jeweils einen in das Innere 209, 219 der U-Form hineinragenden plattenförmigen Auflageabschnitt 205 bzw. 215 auf. Sowohl die Wandung 203, die sich um die erste Aufnahme 20 herum erstreckt, als auch die Wandung 213, die sich um die zweite Aufnahme 21 herum erstreckt, weist in ihrem mittleren Bereich 206 bzw. 216 eine Durchgangsöffnung 207 bzw. 217 auf der Unterseite 27 des Verbinderhalters 2, auf der das jeweilige Ausgleichselement 5, 6 aufgefügt wird, auf. Auf der gegenüberliegenden Oberseite 26, die nicht zum Auflagern des jeweiligen Ausgleichselements 5, 6 ausgebildet ist, ist in dem Wandungsabschnitt zwischen den doppellagigen Wandabschnitten 200, 201 bzw. 210, 211 jeweils eine Aussparung 208 bzw. 218 vorgesehen. Dies kann besonders gut Figur 8 entnommen werden. Die Durchgangsöffnung 207 bzw. 217 und die Aussparung 208 bzw. 218 dienen zum Hindurchgreifen von Rastnasenabschnitten 32, 132 bzw. 42, 142 und endseitig an diesen angeordneten Rastnasen 33, 133 bzw. 43, 143 der beiden Fluidverbinder 3, 4, wie sie insbesondere den Figuren 13 bis 16 entnommen werden können.

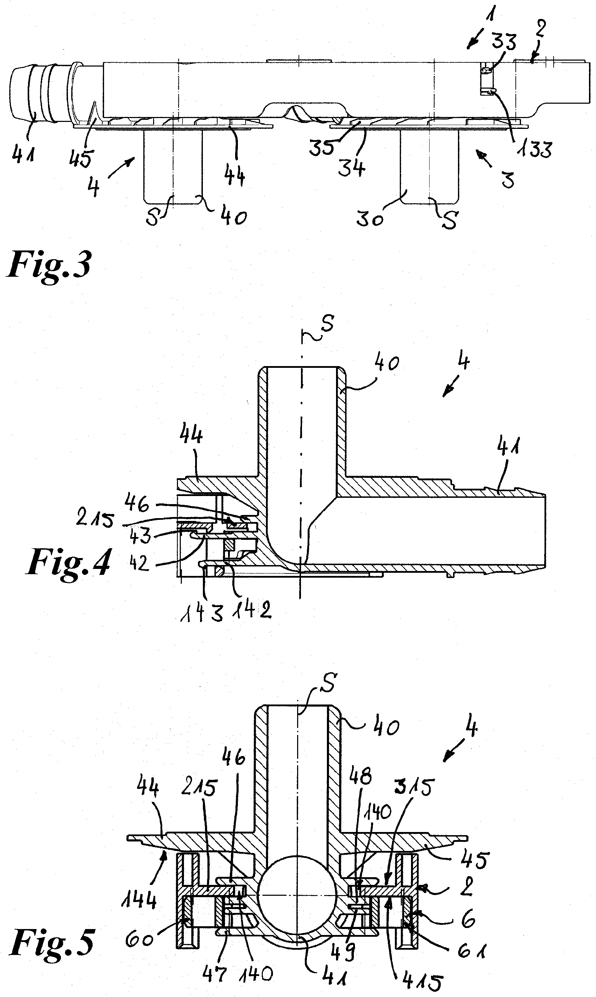

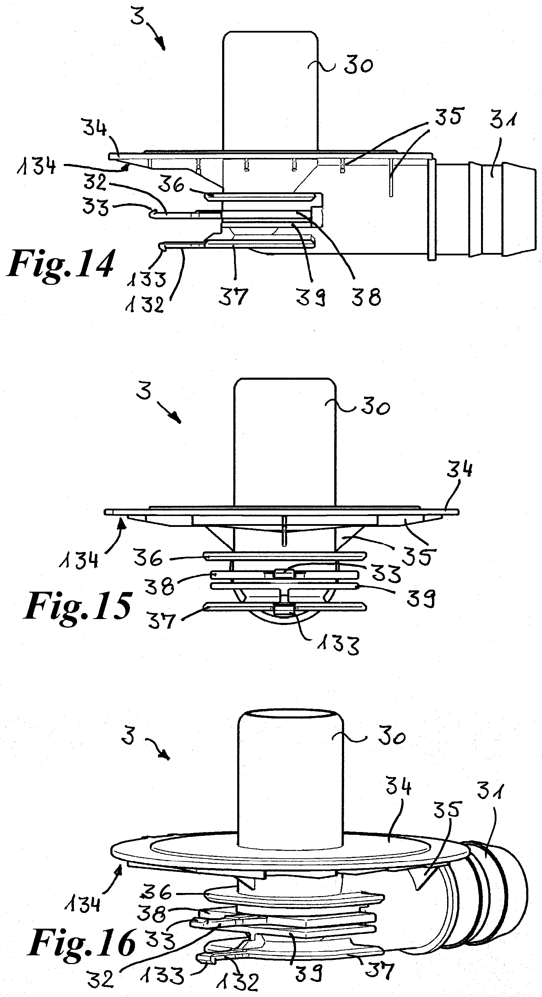

Jeder der beiden Fluidverbinder 3, 4 umfasst zwei Anschlussstutzen 30, 31 bzw. 40, 41, wie bereits erwähnt. Die beiden Anschlussstutzen stehen jeweils etwa in einem rechten Winkel zueinander, wobei der jeweilige erste Anschlussstutzen 30 bzw. 40 zum Verbinden mit einer entsprechenden Gegenkontur am Einbauort in einem Fahrzeug, wie beispielsweise einem Kühlmodul oder einem Kühlelement oder Kühlaggregat einer Traktionsbatterie des Fahrzeugs dient, während an den jeweiligen zweiten Anschlussstutzen 31 bzw. 41 eine Kühlmittelleitung oder anderweitige Leitung angeschlossen werden kann. Jeder der Fluidverbinder 3, 4 weist ferner den jeweiligen ersten Anschlussstutzen 30 bzw. 40 umgebend ein tellerförmiges Element 34 bzw. 44 auf. Das jeweilige tellerförmige Element 34 bzw. 44 weist auf seiner Unterseite 134 bzw. 144 Verstärkungselemente in Form von Versteifungsrippen 35 bzw. 45 auf. Mit den Versteifungsrippen 35 bzw. 45 lagert das tellerförmige Element 34 bzw. 44 des ersten und des zweiten Fluidverbinders 3, 4 auf dem Verbinderhalter 2 auf, wie beispielsweise Figur 5 entnommen werden kann. Die Versteifungsrippen 35, 45 der beiden Fluidverbinder 3, 4 dienen insbesondere zum Versteifen des tellerförmigen Elements 34 bzw. 44 bei dem nach der Endmontage der Verbinderhalter-Verbinder-Einheit 1 im Fahrzeug erfolgenden Umschäumen, um hierbei eine Beschädigung des jeweiligen tellerförmigen Elements 34 bzw. 44 der beiden Fluidverbinder 3, 4 sicher verhindern zu können. Wie z.B. Figur 3, jedoch auch den Figuren 15 und 16 sehr gut entnommen werden kann, erstreckt sich eine der Versteifungsrippen 35 bzw. 45 auch über einen Teil des Umfangs des jeweiligen zweiten Anschlussstutzens 31 bzw. 41 des jeweiligen Fluidverbinders 3, 4 hinweg, stützt somit das tellerförmige Element 34 bzw. 44 auch gegenüber dem zweiten Anschlussstutzen 31 bzw. 41 ab. Hierdurch kann eine besonders gute Stabilität des Fluidverbinders 3 bzw. 4 im Bereich seines jeweiligen tellerförmigen Elements 34 bzw. 44 geschaffen werden.

Wie den Figuren 13 bis 16 weiter entnommen werden kann, sind etwa parallel zu dem jeweiligen tellerförmigen Element 34 bzw. 44 der beiden Fluidverbinder 3, 4 jeweils weitere plattenförmige Elemente bzw. Abschnitte außenseitig um den ersten Anschlussstutzen 30 bzw. 40 und den Übergangsbereich des jeweiligen ersten Anschlussstutzens 30 bzw. 40 zu dem jeweiligen zweiten Anschlussstutzen 31 bzw. 41angeordnet. Direkt benachbart zu dem jeweiligen tellerförmigen Element 34 bzw. 44, jedoch beabstandet zu diesem, kragt von der Außenseite des jeweiligen ersten Anschlussstutzens 30 bzw. 40 ein Halteabschnitt 36 bzw. 46 vor. Dieser ist plattenförmig flach ausgebildet, wie beispielsweise auch Figur 5 besonders gut entnommen werden kann. Dieser Halteabschnitt 36, 46 dient dem Auflagern und Abstützen an dem jeweiligen plattenförmigen Auflageabschnitt 205 bzw. 215 der beiden Aufnahmen 20, 21, wobei sich der Halteabschnitt 36, 46 jeweils auf der ersten Seite 305 bzw. 315 des jeweiligen plattenförmigen Auflageabschnitts 205 bzw. 215 abstützt und dessen jeweilige zweite Seite 405 bzw. 415 zum Auflagern des jeweiligen Ausgleichselements 5 bzw. 6 dient, wie ebenfalls Figur 5 sehr gut entnommen werden kann.

Um das jeweilige Ausgleichselement 5 bzw. 6 auf der zweiten Seite 405 bzw. 415 der beiden plattenförmigen Auflageabschnitte 205, 215 der beiden Aufnahmen 20, 21 in z-Richtung festhalten zu können, ist beabstandet zu dem ersten Halteabschnitt 36 bzw. 46 der beiden Fluidverbinder 3, 4 ein zweiter Halteabschnitt 37 bzw. 47, hier plattenförmiger Halteabschnitt, außenseitig im unteren Endbereich des jeweiligen Fluidverbinder 3, 4 angeordnet. Der zweite Halteabschnitt 37 bzw. 47 liegt an dem Ausgleichselement 5 bzw. 6 an, wie ebenfalls Figur 5 entnommen werden kann. Das Ausgleichselement 5 bzw. 6 wird somit in seiner Anordnung auf dem jeweiligen plattenförmigen Auflageabschnitt 205 bzw. 215 durch die beiden Halteabschnitte 36, 37 bzw. 46, 47 in z-Richtung fixiert.

Der jeweilige Fluidverbinder 3, 4 weist in Anordnung zwischen den beiden vorkragenden Halteabschnitten 36, 37 bzw. 46, 47 zwei weitere plattenförmige Abschnitte auf, nämlich zwei plattenförmige Abstützabschnitte 38, 39 bzw. 48, 49, wie sie ebenfalls Figur 5 sowie den Figuren 13 bis 16 sehr gut entnommen werden können. In y-Richtung weisen die beiden Abstützabschnitte 38, 39 bzw. 48, 49 eine geringere Abmessung auf als die jeweiligen Halteabschnitte 36, 37 bzw. 46, 47 der beiden Fluidverbinder 3, 4. Die beiden Abstützabschnitte 38, 39 bzw. 48, 49 dienen dem seitlichen Abstützen von an den beiden Schenkeln 50, 51 bzw. 60, 61 des jeweiligen Ausgleichselements 5, 6 angeordneten Armen, die Figur 5 ebenfalls entnommen werden kann. Hierdurch wird der jeweilige Fluidverbinder 3, 4 in den Aufnahmen 20, 21 auch in y-Richtung optimal gehalten, wobei, wie nachstehend noch näher erläutert wird, ein geringfügiges Bewegen des jeweiligen Fluidverbinders 3, 4 innerhalb der Aufnahmen 20, 21 in x-Richtung und y-Richtung möglich ist, insbesondere um etwa +/- 3 mm.

Die Rastnasenabschnitte 32, 42 sind die Hauptbegrenzungsmittel für die Begrenzung der Bewegung des jeweiligen Fluidverbinders 3, 4 gegenüber den Aufnahmen 20, 21 in x-Richtung in Richtung des zweiten Anschlussstutzens 31, 41 des jeweiligen Fluidverbinders 3, 4. Die Bewegung in x-/y-Richtung wird ansonsten durch einen umlaufenden Spalt 140 zwischen dem in Richtung des Fluidverbinders 3, 4 weisenden Endes des u-förmigen plattenförmigen Auflageabschnitts 205 bzw. 215 und der dort benachbarten Außenseite des Fluidverbinders 3, 4 begrenzt, wie in Figur 5 erkennbar ist. Der umlaufende Spalt 140 ist somit zwischen dem jeweiligen vorkragenden Halteabschnitt 36, 46 und dem jeweiligen Abstützabschnitt 38, 48 zwischen dem dort eingreifenden Auflageabschnitt 205, 215 und der Außenseite des Fluidverbinders 3, 4 gebildet.

Wie den Figuren 13, 14, 15 und 16 weiter entnommen werden kann, weisen der jeweilige Halteabschnitt 37 bzw. 47 und der jeweilige Abstützabschnitt 38 bzw. 48 der beiden Fluidverbinder 3, 4 jeweils einen Rastnasenabschnitt 32 bzw. 132 bzw. 42 bzw. 142 mit endseitig an diesen angeordneten Rastnasen 33, 43, 133, 143 auf. Der Rastnasenabschnitt 32 bzw. 42 ist hierbei in x-Richtung kürzer dimensioniert als der jeweilige Rastnasenabschnitt 132 bzw. 142 am jeweiligen Abstützabschnitt 38, 48. Dies kann besonders gut Figur 14 entnommen werden. Dieser Figur ist ebenfalls gut entnehmbar, dass die Rastnasen 33 und 133 bzw. 43 und 143 jeweils in entgegengesetzte Richtungen von den Rastnasenabschnitten 32, 132 bzw. 42, 142 abragen. Wie Figur 4 zu entnehmen ist, dienen die Rastnasen 33, 43 zum Hintergreifen der jeweiligen Wandung 203 bzw. 213 nach Durchtritt durch die darin vorgesehene jeweilige Durchgangsöffnung 207 bzw. 217, während die jeweilige Rastnase 133 bzw. 143 zum Durchtritt durch die jeweilige Aussparung 208 bzw. 218 und ggf. zum Verrasten auf der Oberseite 26 des Verbinderhalters 2 bzw. des dort angeordneten Teils der Wandung 203 bzw. 213, die mit der jeweiligen Aussparung 208, 218 versehen ist, dient. Durch die Rastnasen 33, 43, 133, 143 ist ein Begrenzen der Bewegung bzw. Bewegbarkeit des jeweiligen Fluidverbinders 3, 4 in den Aufnahmen 20, 21 in x-Richtung möglich. Das Hindurchgreifen der Rastnasenabschnitte 32, 42 durch die jeweilige Durchgangsöffnung 207 bzw. 217 der beiden Aufnahmen 20, 21 kann ebenfalls den Figuren 1 und 2 sehr gut entnommen werden.

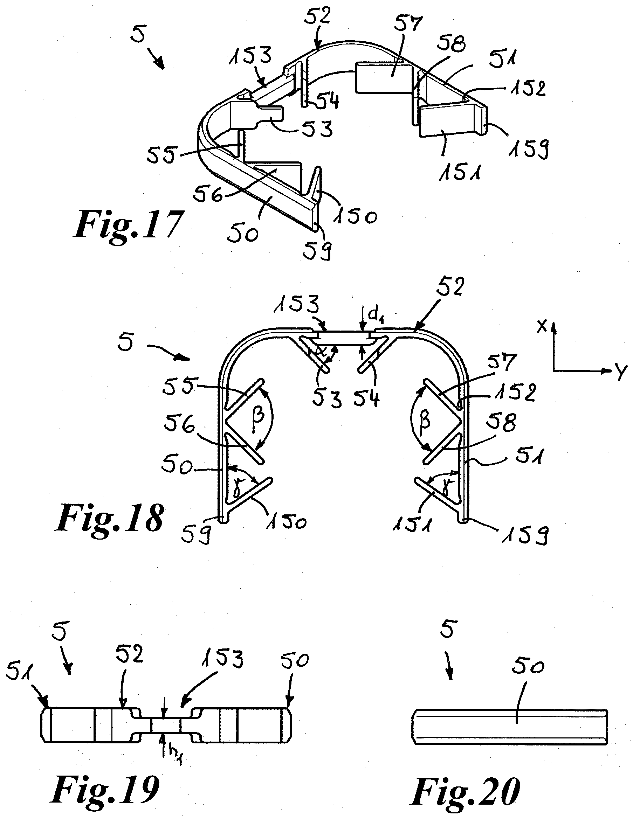

Das jeweilige Ausgleichselement 5 bzw. 6 ist in der Draufsicht u-förmig, wie den Figuren 17 und 18, in denen das Ausgleichselement 5 gezeigt ist, zu entnehmen ist. Die beiden Ausgleichselemente 5, 6 sind baugleich, so dass alle in den Figuren 17 bis 20 gezeigten Ausgestaltungen des Ausgleichselement 5 entsprechend auch für das Ausgleichelement 6 gelten. Beide u-förmigen Ausgleichselemente 5, 6 weisen jeweils ein Mittelstück 52 bzw. 62 und die bereits erwähnten Schenkel 50, 51 bzw. 60, 61 auf. Sowohl das jeweilige Mittelstück 52 bzw. 62 als auch die ersten und zweiten Schenkel 50, 51 bzw. 60, 61 weisen jeweils in das Innere der U-Form des Ausgleichselements 5 bzw. 6 hineinragende, jeweils in einem Winkel zueinander stehende Arme 53, 54, 55, 56, 57, 58, 150, 151 bzw. 63, 64, 65, 66, 67, 68, 160, 161 auf. Die beiden an dem Mittelstück 52 angeordneten Arme 53, 54 bzw. 63, 64 sind aufeinander zu gerichtet und stehen zu dem jeweiligen Mittelstück 52 bzw.62 in einem spitzen Winkel α, wie besonders gut Figur 18 entnommen werden kann. Hierdurch weisen sie eine Beweglichkeit in einer Richtung des Mittelstücks auf, bewegen sich bei einem Beaufschlagen in Richtung des Mittelstücks 52 aufeinander zu, wenn der Fluidverbinder 3 bzw. 4 in x-Richtung in Richtung des Ausgleichselements 5 bzw. 6 bewegt wird. Wird hingegen der Fluidverbinder 3 bzw. 4 von dem Ausgleichselement 5 weg in Richtung aus der jeweiligen Aufnahme 20 bzw. 21 heraus in x-Richtung bewegt, vergrößert sich der spitze Winkel α, den die beiden Arme 53, 54 bzw. 63, 64 mit dem jeweiligen Mittelstück 52 bzw. 62 einschließen. Über ein Bewegen der beiden Arme 53, 54 bzw. 63, 64 ist somit ein Ausgleich der Position des jeweiligen Fluidverbinders 3, 4 in x-Richtung möglich.

Um einen Ausgleich in y-Richtung ebenfalls zu ermöglichen, dienen die jeweils v-förmig zueinander stehenden Arme 55, 56 am ersten Schenkel 50 und Arme 57, 58 am zweiten Schenkel 51 des Ausgleichselements 5 bzw. die entsprechenden v-förmig zueinander stehenden Arme 65, 66 am ersten Schenkel 60 und Arme 67, 68 am zweiten Schenkel 61 des Ausgleichselements 6. Die v-förmig zueinander stehenden Arme 55, 56 bzw. 57, 58 bzw. 65, 66 bzw. 67, 68 bilden zwischen sich jeweils einen stumpfen Winkel β, wobei dieser sich vergrößert, wenn der jeweilige Fluidverbinder 3 bzw. 4 in Richtung des ersten Schenkels 50 bzw. des zweiten Schenkels 51 bzw. des ersten Schenkels 60 bzw. zweiten Schenkels 61 des jeweiligen Ausgleichselements 5 bzw. 6 zum Toleranzausgleich bewegt wird. Wird hingegen der jeweilige Fluidverbinder 3, 4 weg von dem jeweiligen Schenkel 50 bzw. 51 bzw. 60 bzw. 61 in y-Richtung bewegt, verkleinert sich der von den jeweiligen Armen 55, 56 bzw. 57, 58 bzw. 65, 66 bzw. 67, 68 eingeschlossene Winkel β wieder. Hierüber ist somit ein Toleranzausgleich in y-Richtung für den jeweiligen Fluidverbinder 3, 4 in der jeweiligen Aufnahme 20, 21 möglich. Sogleich stützen sich die Arme außenseitig an den Abstützabschnitten 38, 39 bzw. 48, 49 der beiden Fluidverbinder 3, 4 ab, wie vorstehend bereits erläutert.

Die jeweiligen endseitig an den Schenkeln 50 bzw. 51 bzw. 60 bzw. 61 der beiden Ausgleichselemente 5, 6 angeordneten Arme 150, 151 bzw. 160, 161 dienen zum Positionieren des jeweiligen Fluidverbinders 3, 4 und hierbei zum Toleranzausgleich in x-Richtung bzw. in negativer Steckrichtung des Fluidverbinders 3, 4 bezüglich des Verbinderhalters 2 und dessen Aufnahmen 20, 21. Die jeweiligen Arme 150, 151 bzw. 160, 161 stützen sich ebenfalls an den Abstützabschnitten 38, 39 bzw. 48, 49 ab, allerdings auf deren in Richtung des jeweiligen zweiten Anschlussstutzens 31, 41 gerichteten Seite, somit auf der senkrecht zu der Abstützseite an diesen, an denen sich die v-förmig zueinander stehenden Arme 55, 56 bzw. 57, 58 bzw. 65, 66 bzw. 67, 68 abstützen. Auch die beiden Arme 150, 151 bzw. 160, 161 der Ausgleichselemente 5, 6 stehen in einem spitzen Winkel γ zu dem jeweiligen Schenkel 50, 51 bzw. 60, 61 des Ausgleichselements 5 bzw. 6, von dem sie abragen und mit dem sie einteilig ausgebildet sind. Dies kann ebenfalls Figur 18 besonders gut entnommen werden. Benachbart zu den beiden Armen 150, 151 bzw. 160, 161 ragen die beiden Schenkel 50, 51 bzw. 60, 61 mit einem Endabschnitt 59, 159 bzw. 69, 169 vor. Mit diesem jeweiligen Endabschnitt 59, 159 bzw. 69, 169 wird das jeweilige Ausgleichselement 5, 6 in dem jeweiligen u-förmigen Endabschnitt 202, 204 bzw. 212, 214 als Fixiereinrichtung zum Fixieren des jeweiligen Ausgleichselements 5, 6 in den Aufnahmen 20, 21 gehalten. Dies kann beispielsweise Figur 2 entnommen werden.

Wie Figur 18 ebenfalls zu entnehmen ist, kann die Beweglichkeit der Arme des jeweiligen Ausgleichselements 5, 6 durch einen jeweils verrundeten Übergang 152, 162 der Arme in die beiden Schenkel 50, 51 bzw. 60, 61 und das Mittelstück 52 bzw. 62 der beiden Ausgleichselemente 5, 6 geschaffen werden. Ferner kann insbesondere den Figuren 17, 18 und 19 entnommen werden, dass das jeweilige Mittelstück 52 bzw. 62 des jeweiligen Ausgleichselements 5, 6 in seinem mittleren Bereich 153 bzw. 163 jeweils eine geringere Höhe h₁ aufweist als das jeweilige Ausgleichselement 5, 6 über seine übrige Erstreckung seines Mittelstücks 52 bzw. 62 und seiner jeweiligen Schenkel 50, 51 bzw. 60, 61 hinweg. Dies kann ebenfalls den Figuren 17 bis 20 sehr gut entnommen werden. Damit bei einem Zusammendrücken des u-förmigen Ausgleichselements 5, 6 in der x-/y-Ebene keine Beschädigung, insbesondere kein Bruch, in diesem mittleren Bereich 153 bzw. 163 des Mittelstücks 52 bzw. 62 des jeweiligen Ausgleichselements 5, 6, der eine reduzierte Höhe h₁ aufweist, auftritt, ist dieser jeweilige mittlere Bereich 153, 163 dicker ausgestaltet, weist also eine größere Dicke d₁ auf als das Mittelstück 52 bzw. 62 und die Schenkel 50, 51 bzw. 60, 61 des jeweiligen Ausgleichselements 5, 6 über deren jeweilige weitere Erstreckung hinweg. Ein Verbiegen des Ausgleichselements 5, 6 in der +/- z-Richtung kann der jeweilige verdickte mittlere Bereich 153, 163 zumindest im Wesentlichen nicht verhindern. Das Ausbilden des mittleren Bereichs 153, 163 des jeweiligen Mittelstücks 52 bzw. 62 des jeweiligen Ausgleichselements 5, 6 mit jeweils einer geringeren Höhe h₁ ermöglicht es jedoch, die jeweiligen Rastnasenabschnitte 32, 42 bzw. 132, 142 über bzw. unter dem jeweiligen mittleren Bereich 153, 163 vorbeizuführen. Dieser mittlere Bereich 153, 163 des jeweiligen Mittelstücks 52, 62 des jeweiligen Ausgleichselements 5, 6 liegt somit zwischen der jeweiligen Durchgangsöffnung 207, 217 und der jeweiligen dazu benachbarten Aussparung 208 bzw. 218 der Aufnahmen 20, 21 des Verbinderhalters 2.

Die Verbinderhalter-Verbinder-Einheit 1 wird wie folgt montiert: zunächst werden auf die Unterseite des Verbinderhalters 2, wie sie in Figur 9 gezeigt ist, auf die beiden Aufnahmen 20, 21 die Ausgleichselemente 5, 6 in z-Richtung aufgefügt. Anschließend werden in x-Richtung bzw. seitlich bezüglich des Verbinderhalters 2 die beiden Fluidverbinder 3, 4 in die beiden Aufnahmen 20, 21 und die in diesen aufgenommenen Ausgleichselemente 5, 6 eingeschoben. Die Rastnasenabschnitte 32, 42 mit ihren endseitigen Rastnasen 33, 43 der beiden Fluidverbinder 3, 4 durchgreifen dabei die jeweilige Durchgangsöffnung 207, 217 der beiden Aufnahmen 20, 21 und die Rastnasenabschnitte 132, 142 mit ihren endseitigen Rastnasen 133, 143 die jeweilige Aussparung 208 , 218 der beiden Aufnahmen 20, 21. Im fertig montierten Zustand ergibt sich somit die in den Figuren 1 und 2 gezeigte Positionierung der Fluidverbinder 3, 4 in dem mit den Ausgleichselementen 5, 6 versehenen Verbinderhalter 2 und somit die Verbinderhalter-Verbinder-Einheit 1.

Durch die Arme des jeweiligen Ausgleichselements 5, 6 kann beispielsweise eine Bewegbarkeit des jeweiligen in den Aufnahmen 20, 21 angeordneten Fluidverbinders 3, 4 in x- und y-Richtung um +/- 3 mm ermöglicht werden. Um eine solche Bewegung zu ermöglichen, wird entsprechend eine Kraft auf die jeweiligen Arme ausgeübt, um diese aus ihrer vorgegebenen Position geringfügig auszulenken. Durch den jeweiligen verrundeten Übergang 152 bzw. 162 wird eine Flexibilität und Dehnbarkeit geschaffen, so dass es nicht zu einem Beschädigen der Arme und gegebenenfalls einem Abbrechen von diesen von den jeweiligen Schenkeln 50, 51 bzw. 60, 61 bzw. dem Mittelstück 52, 62 des jeweiligen Ausgleichselements 5, 6 kommen kann. Erkennbar wird durch die Verbinderhalter-Verbinder-Einheit 1 somit lediglich eine Bewegbarkeit in x- und y-Richtung zugelassen, nicht jedoch in z-Richtung, die der Hochachse S des jeweiligen ersten Anschlussstutzens 30 bzw. 40 entspräche, wobei jedoch um diese Hochachse S als Drehachse eine geringfügige Drehung innerhalb der x-y-Ebene grundsätzlich zugelassen werden kann. Der mögliche Drehwinkel bzw. die Drehbarkeit wird hauptsächlich durch die Steifigkeit der an den jeweiligen zweiten Anschlussstutzen 31 bzw. 41 angeschlossenen Kühlmittelleitungen oder anderweitigen Leitungen begrenzt. Es ist somit ein optimales Einstellen der Position der beiden Fluidverbinder 3, 4 zum Verbinden mit einer entsprechenden Gegenkontur in einem Fahrzeug, wie beispielsweise einem Kühlelement, Kühlmodul, Kühlaggregat einer Traktionsbatterie des Fahrzeugs möglich. Im Vergleich zum Stand der Technik ist der Aufbau der Verbinderhalter-Verbinder-Einheit 1 weniger kompliziert und kostengünstiger und es besteht nicht das Risiko, dass die Fluidverbinder sich ungewollt in z-Richtung bewegen können. Ferner können die Materialien des Verbinderhalters, der Fluidverbinder und der Ausgleichselemente durch den mehrteiligen Aufbau der Verbinderhalter-Verbinder-Einheit sehr gut auf deren jeweilige Aufgabe angepasst werden. Bei einem einteiligen Aufbau der Verbinderhalter-Verbinder-Einheit, wie sie im Stand der Technik offenbart ist, ist man bei der Materialauswahl selbst bei Herstellen im Zwei- und Dreikomponentenverfahren demgegenüber deutlich stärker beschränkt.

Neben den im Vorstehenden beschriebenen und in den Figuren gezeigten Ausführungsvarianten von Verbinderhalter-Verbinder-Einheiten, die zumindest einen Verbinderhalter, zumindest zwei Fluidverbinder und zumindest eine Toleranzausgleichseinrichtung umfassen, können noch zahlreiche weitere gebildet werden, insbesondere auch beliebige Kombinationen der vorstehend genannten Merkmale von dieser, wobei die einzelnen Komponenten der Verbinderhalter-Verbinder-Einheit jeweils als separate Teile ausgebildet oder ineinandergefügt werden, also nicht einteilig miteinander sind, wobei der zumindest eine Verbinderhalter zumindest zwei Aufnahmen zur Aufnahme der zumindest zwei Fluidverbinder aufweist, und wobei die Toleranzausgleichseinrichtung als Ausgleichselement ausgebildet ist, das in eine jeweilige der Aufnahmen des Verbinderhalters eingefügt werden kann, wobei das jeweilige Ausgleichselement u-förmig ausgebildet ist, entsprechend den Aufnahmen im Verbinderhalter und dort aufgefügt werden kann.

### Bezugszeichenliste

- 1: Verbinderhalter-Verbinder-Einheit
- 2: Verbinderhalter
- 3: Fluidverbinder
- 4: Fluidverbinder
- 5: Ausgleichselement
- 6: Ausgleichselement
- 20: erste Aufnahme
- 21: zweite Aufnahme
- 22: Körper
- 23: Endabschnitt Außenseite
- 24: erste Befestigungsöffnung
- 25: zweite Befestigungsöffnung
- 26: Oberseite
- 27: Unterseite
- 28: Versteifungssteg
- 29: Wandungsabschnitt
- 30: erster Anschlussstutzen
- 31: zweiter Anschlussstutzen
- 32: Rastnasenabschnitt
- 33: Rastnase
- 34: tellerförmiges Element
- 35: Versteifungsrippe
- 36: erster Halteabschnitt
- 37: zweiter Halteabschnitt
- 38: Abstützabschnitt
- 39: Abstützabschnitt
- 40: erster Anschlussstutzen
- 41: zweiter Anschlussstutzen
- 42: Rastnasenabschnitt
- 43: Rastnase
- 44: tellerförmiges Element
- 45: Versteifungsrippe
- 46: erster Halteabschnitt
- 47: zweiter Halteabschnitt
- 48: Abstützabschnitt
- 49: Abstützabschnitt
- 50: erster Schenkel
- 51: zweiter Schenkel
- 52: Mittelstück
- 53: erster Arm (an 52)
- 54: zweiter Arm (an 52)
- 55: dritter Arm (an 50)
- 56: vierter Arm (an 50)
- 57: fünfter Arm (an 51)
- 58: sechster Arm (an 51)
- 59: Endabschnitt
- 60: erster Schenkel
- 61: zweiter Schenkel
- 62: Mittelstück
- 63: erster Arm
- 64: zweiter Arm
- 65: dritter Arm
- 66: vierter Arm
- 67: fünfter Arm
- 68: sechster Arm
- 69: Endabschnitt
- 132: Rastnasenabschnitt
- 133: Rastnase
- 134: Unterseite von 34
- 140: umlaufender Spalt
- 142: Rastnasenabschnitt
- 143: Rastnase
- 144: Unterseite von 44
- 150: siebter Arm
- 151: achter Arm
- 152: verrundeter Übergang
- 153: mittlerer Bereich von 52
- 159: Endabschnitt
- 160: siebter Arm
- 161: achter Arm
- 162: verrundeter Übergang
- 163: mittlerer Bereich von 62
- 169: Endabschnitt
- 200: doppellagiger Wandabschnitt
- 201: doppellagiger Wandabschnitt
- 202: Fixiereinrichtung/u-förmiger Endabschnitt
- 203: Wandung
- 204: Fixiereinrichtung/u-förmiger Endabschnitt
- 205: plattenförmiger Auflageabschnitt
- 206: mittlerer Bereich
- 207: Durchgangsöffnung
- 208: Aussparung
- 209: Inneres
- 210: doppellagiger Wandabschnitt
- 211: doppellagiger Wandabschnitt
- 212: Fixiereinrichtung/u-förmiger Endabschnitt
- 213: Wandung
- 214: Fixiereinrichtung/u-förmiger Endabschnitt
- 215: plattenförmiger Auflageabschnitt
- 216: mittlerer Bereich
- 217: Durchgangsöffnung
- 218: Aussparung
- 219: Inneres
- 305: erste Seite von 205
- 315: erste Seite von 215
- 405: zweite Seite von 205
- 415: zweite Seite von 215
- h₁: Höhe im mittleren Bereich 153, 163
- d₁: Dicke im mittleren Bereich 153, 163
- α: Winkel zwischen 52 und 53 bzw. 52 und 54/62 und 63 bzw. 62 und 64
- β: Winkel zwischen 55 und 56 bzw. 57 und 58/65 und 66 bzw. 67 und 68
- γ: Winkel zwischen 50 und 150 bzw. 51 und 151/60 und 160 bzw. 61 und 161
- S: Hochachse

## Patentansprüche

1. Verbinderhalter-Verbinder-Einheit (1), umfassend zumindest einen Verbinderhalter (2), zumindest zwei Fluidverbinder (3, 4) und jeweils zumindest eine Toleranzausgleichseinrichtung, wobei der zumindest eine Verbinderhalter (2) zumindest zwei Aufnahmen (20, 21) zur Aufnahme der zumindest zwei Fluidverbinder (3, 4) aufweist,
**dadurch gekennzeichnet, dass**
der Verbinderhalter (2), die zumindest zwei Fluidverbinder (3, 4) und die zumindest eine Toleranzausgleichseinrichtung zum Toleranzausgleich bezüglich der Anordnung des jeweiligen Fluidverbinders (3, 4) in einer jeweiligen der Aufnahmen (20, 21) des zumindest einen Verbinderhalters (2) jeweils als separate Teile ausgebildet und hergestellt und ineinanderfügbar oder ineinandergefügt sind,
und dass die zumindest eine Toleranzausgleichseinrichtung als Ausgleichselement (5, 6) ausgebildet und in eine jeweilige der Aufnahmen (20, 21) des zumindest einen Verbinderhalters (2) einfügbar oder eingefügt ist und einerseits zum Fixieren der Position der zumindest zwei Fluidverbinder (3, 4) in den Aufnahmen (20, 21) dient, andererseits zum Ermöglichen eines Toleranzausgleichs.

2. Verbinderhalter-Verbinder-Einheit (1) nach Anspruch 1,
**dadurch gekennzeichnet, dass**
die zumindest zwei Aufnahmen (20, 21) des Verbinderhalters (2) u-förmig ausgebildet sind und jeweils zumindest einen in das Innere (209, 219) der U-Form hineinragenden plattenförmigen Auflageabschnitt (205, 215) aufweisen zum Auflagern des jeweiligen Ausgleichselements (5, 6) und zumindest eines ersten Halteabschnitts (36, 46) des jeweiligen Fluidverbinders (3, 4), insbesondere das jeweilige zumindest eine Ausgleichselement (5, 6) zwischen dem zumindest einen plattenförmigen Auflageabschnitt (205, 215) der jeweiligen Aufnahme (20, 21) des Verbinderhalters (2) und zumindest einem zweiten Halteabschnitt (37, 47) des jeweiligen Fluidverbinders (2) aufnehmbar und haltbar oder aufgenommen und gehalten ist.

3. Verbinderhalter-Verbinder-Einheit (1) nach Anspruch 2,
**dadurch gekennzeichnet, dass**
der zumindest eine erste Halteabschnitt (36, 46) und/oder der zumindest eine zweite Halteabschnitt (37, 47) des jeweiligen Fluidverbinders (3, 4) plattenförmig ist/sind.

4. Verbinderhalter-Verbinder-Einheit (1) nach einem der vorstehenden Ansprüche,
**dadurch gekennzeichnet, dass**
der jeweilige Fluidverbinder (3, 4) zumindest einen mit zumindest einer Rastnase (33, 43, 133, 143) versehenen Rastnasenabschnitt (32, 42, 132, 142), insbesondere zumindest zwei endseitig mit zumindest einer Rastnase (33, 43, 133, 143) versehene Rastnasenarme, aufweist, insbesondere der zweite Halteabschnitt (37, 47) des jeweiligen Fluidverbinders (3, 4) den mit zumindest einer Rastnase (33, 43, 133, 143) versehenen zweiten Rastnasenabschnitt (32, 42, 132, 142), insbesondere Rastnasenarm, umfasst, und der zumindest eine Verbinderhalter (2) in zumindest einer eine jeweilige Aufnahme (20, 21) begrenzenden Wandung (203, 213) zumindest eine Durchgangsöffnung (207, 217) und/oder Aussparung (208, 218) zum Durchführen des zumindest einen mit der zumindest einen Rastnase (33, 43, 133, 143) versehenen Rastnasenabschnitts (32, 42, 132, 142) und zum Hintergreifen der Wandung (203, 213) mit der zumindest einen Rastnase (33, 43, 133, 143) des zumindest einen Rastnasenabschnitts (32, 42, 132, 142) aufweist.

5. Verbinderhalter-Verbinder-Einheit (1) nach Anspruch 4,
**dadurch gekennzeichnet, dass**
die zumindest zwei Rastnasen (33, 43, 133, 143) der zumindest zwei mit diesen versehenen Rastnasenabschnitte (32, 42, 132, 142) eine voneinander weg gerichtete Orientierung aufweisen, um die zumindest eine mit der zumindest einen Durchgangsöffnung (207, 217) und/oder Aussparung (208, 218) versehene Wandung (203, 213) und/oder eine Raststelle des Verbinderhalters (2) in entgegengesetzten Richtungen zu hintergreifen.

6. Verbinderhalter-Verbinder-Einheit (1) nach einem der vorstehenden Ansprüche,
**dadurch gekennzeichnet, dass**
die zumindest zwei Aufnahmen (20, 21) des Verbinderhalters (2) auf ihrer einen Unterseite (27) zumindest teilweise mit zumindest einer Fixiereinrichtung (202, 204, 212, 214) zum Fixieren des zumindest einen Ausgleichselements (5, 6) und auf ihrer Oberseite (26) mit einer ein Einfügen des Ausgleichselements (5, 6) behindernden Einrichtung (200, 201, 210, 211), insbesondere Formgebung, versehen sind.

7. Verbinderhalter-Verbinder-Einheit (1) nach einem der vorstehenden Ansprüche,
**dadurch gekennzeichnet, dass**
das Ausgleichselement (5, 6) u-förmig ist, umfassend zwei Schenkel (50, 51, 60, 61) und ein die beiden Schenkel (50, 51, 60, 61) miteinander verbindendes Mittelstück (52, 62), wobei das Ausgleichselement (5, 6) in das Innere der U-Form hineinragende, jeweils in einem Winkel (α, β, γ) zu dem Mittelstück (52, 62), den Schenkeln (50, 51, 60, 61) oder zueinander stehende Arme (53, 54, 55, 56, 57, 58, 63, 64, 65, 66, 67, 68, 150, 151, 160, 161) aufweist, die an dem jeweiligen Fluidverbinder (3, 4) außenseitig an- und/oder eingreifbar sind oder an- und/oder eingreifen, insbesondere die beiden Schenkel (50, 51, 60, 61) und das die Schenkel (50, 51, 60, 61) miteinander verbindende Mittelstück (52, 62) des u-förmigen Ausgleichselements (5, 6) jeweils mit den Armen (53, 54, 55, 56, 57, 58, 63, 64, 65, 66, 67, 68, 150, 151, 160, 161) versehen sind, insbesondere das Mittelstück (52, 62) im mittleren Bereich (153, 163) zumindest zwei Arme (53, 54, 63, 64) aufweist und die beiden Schenkel (50, 51, 60, 61) jeweils zumindest drei Arme (55, 56, 57, 58, 63, 64, 65, 66, 67, 68, 150, 151, 160, 161) aufweisen.

8. Verbinderhalter-Verbinder-Einheit (1) nach Anspruch 7,
**dadurch gekennzeichnet, dass**
das Mittelstück (52, 62) des Ausgleichselements (5, 6) in seinem mittleren Bereich (153, 163) eine geringere Höhe (h₁) aufweist als das Ausgleichselement (5, 6) über seine übrige Erstreckung seines Mittelstücks (52, 62) und seiner Schenkel (50, 51, 60, 61) hinweg.

9. Verbinderhalter-Verbinder-Einheit (1) nach einem der Ansprüche 7 oder 8, **dadurch gekennzeichnet, dass**
die Arme (53, 54, 55, 56, 57, 58, 63, 64, 65, 66, 67, 68, 150, 151, 160, 161) leicht federnd an den Schenkeln (50, 51, 60, 61) und dem Mittelstück (52, 62) des Ausgleichselements (5, 6) angeordnet sind, insbesondere ein Übergang (152, 162) von einem jeweiligen Arm (53, 54, 55, 56, 57, 58, 63, 64, 65, 66, 67, 68, 150, 151, 160, 161) zu einem jeweiligen Schenkel (50, 51, 60, 61) und dem Mittelstück (52, 62) verrundet ausgebildet ist.

10. Fluidverbinder (3, 4) für eine Verbinderhalter-Verbinder-Einheit (1) nach einem der vorstehenden Ansprüche,
**dadurch gekennzeichnet, dass**
der Fluidverbinder (3, 4) winkelförmig ist und einen ersten Anschlussstutzen (30, 40) und einen zweiten Anschlussstutzen (31, 41), die zur Medienführung miteinander fluidverbunden sind, aufweist, wobei der Fluidverbinder (3, 4) den ersten Anschlussstutzen (30, 40) außenseitig umgebend ein tellerförmiges Element (34, 44) und im Übergangsbereich vom ersten Anschlussstutzen (30, 40) zum zweiten Anschlussstutzen (31, 41) außen vorkragende plattenförmige Halteabschnitte (36, 37, 46, 47) und räumlich zwischen diesen angeordnete plattenförmige Abstützabschnitte (38, 39, 48, 49) umfasst.

11. Fluidverbinder (3, 4) nach Anspruch 10,
**dadurch gekennzeichnet, dass**
der zweite Halteabschnitt (37, 47) des Fluidverbinders (3, 4) zumindest einen mit zumindest einer Rastnase (133, 143) versehenen Rastnasenabschnitt (132, 142) umfasst und/oder der erste plattenförmige Abstützabschnitt (38, 48) zumindest einen mit zumindest einer Rastnase (33, 43) versehenen Rastnasenabschnitt (32, 42) umfasst.

12. Ausgleichselement (5, 6) für eine Verbinderhalter-Verbinder-Einheit (1) nach einem der Ansprüche 1 bis 9,
**dadurch gekennzeichnet, dass**
das Ausgleichselement (5, 6) u-förmig ist und zwei Schenkel (50, 51, 60, 61) und ein die beiden Schenkel (50, 51, 60, 61) miteinander verbindendes Mittelstück (52, 62) sowie in das Innere seiner U-Form hineinragende, jeweils in einem Winkel (α, β) zueinander stehende Arme (53, 54, 55, 56, 57, 58, 63, 64, 65, 66, 67, 68, 150, 151, 160, 161) umfasst.

13. Ausgleichselement (5, 6) nach Anspruch 12,
**dadurch gekennzeichnet, dass**
das Mittelstück (52, 62) im mittleren Bereich (153, 163) seiner Längserstreckung zumindest zwei Arme (53, 54, 63, 64) aufweist und die beiden Schenkel (50, 51, 60, 61) jeweils zumindest zwei, insbesondere drei Arme (55, 56, 57, 58, 65, 66, 67, 68, 150, 151, 160, 161) aufweisen, insbesondere zwei der Arme (55, 56, 57, 58, 65, 66, 67, 68) der Schenkel (50, 51, 60, 61) v-förmig jeweils zueinander stehen und der dritte Arm (150, 151, 160, 161) der beiden Schenkel (50, 51, 60, 61) in Richtung zu den v-förmig zueinander geneigten Armen (55, 56, 57, 58, 65, 66, 67, 68) in einem spitzen Winkel zu dem jeweiligen Schenkel (50, 51, 60, 61) angeordnet ist.

14. Ausgleichselement (5, 6) nach Anspruch 12 oder 13,
**dadurch gekennzeichnet, dass**
die zumindest zwei Arme (53, 54, 63, 64) am Mittelstück (52, 62) in Richtung aufeinander zu vom Mittelstück (52, 62) des Ausgleichselements (5, 6) abgewinkelt sind, wobei sie mit dem Mittelstück (52, 62) jeweils einen spitzen Winkel (α) einschließen.

15. Verbinderhalter (2) für eine Verbinderhalter-Verbinder-Einheit (1) nach einem der Ansprüche 1 bis 9,
**dadurch gekennzeichnet, dass**
der Verbinderhalter (2) einen Körper (22) umfasst, in dessen mittlerem Bereich eine erste Aufnahme (20) zur Aufnahme eines ersten Fluidverbinders (3) und an dessen einen Ende eine zweite Aufnahme (21) zur Aufnahme eines zweiten Fluidverbinders (4) angeordnet ist, wobei beide Aufnahmen (20, 21) jeweils u-förmig ausgebildet sind und jeweils einen in das Innere (209, 219) ihrer U-Form hineinragenden plattenförmigen Auflageabschnitt (205, 215) aufweisen zum Auflagern eines Ausgleichselements (5, 6) nach einem der Ansprüche 12 bis 14.
